# EUROPÄISCHE PATENTSCHRIFT

(11) **EP 0 795 370 B1**
(45) Veröffentlichungstag und Bekanntmachung des Hinweises auf die Patenterteilung: **03.11.1999**
(21) Anmeldenummer: 97101255.4
(22) Anmeldetag: 28.01.1997
(51) Int. Cl.: B23K 9/035, B23K 9/32

(54) **Badsicherungsband zum Abdecken eines Schweissfugenspaltes zwischen miteinander zu verschweissenden Bauteilen**
Protection backing means for covering a welding gap between workpieces that are to be welded together
Bande de garde pour couvrir un interstice de soudage entre deux pièces de construction à souder ensemble

(30) Priorität: 13.03.1996 DE 19609759
(43) Veröffentlichungstag der Anmeldung: 17.09.1997
(73) Patentinhaber: Jankus, Werner, D-58313 Herdecke (DE)
(72) Erfinder: Jankus, Werner, D-58313 Herdecke (DE)
(74) Vertreter: Niemann, Uwe, Dr.-Ing.

(56) Entgegenhaltungen:
- EP-A- 0 348 125
- DE-U- 8 807 145
- FR-A- 2 542 234
- US-A- 4 182 951
- US-A- 5 110 031

## Beschreibung

Die Erfindung betrifft ein Badsicherungsband zum Abdecken eines Schweißfugenspaltes zwischen miteinander zu verschweißenden Bauteilen, mit mehreren in Bandlängsrichtung hintereinander angeordneten Keramikkörpern, die mit einem verformbaren Träger zusammengehalten werden, der ein metallisches Federband ist, an dessen Längsrändern Dichtleisten aus einem hitzebeständigen Silikon- oder Fluorkautschuk angeordnet sind, die sich beidseits des Schweißfugenspaltes auf den Bauteilen abstützen, wobei die Keramikkörper in dem zwischen Federband und Dichtleisten gebildeten Raum angeordnet und gehalten sind. - Derartige Badsicherungsbänder werden eingesetzt, um eine aufwendige Bearbeitung der Schweißfugen zwischen den miteinander zu verschweißenden Bauteilen zu vermeiden. Sie werden längs des Schweißfugenspaltes verlegt und mit Bügeln oder Klammern fixiert, die magnetisch oder mit Hilfe von Unterdruck an den miteinander zu verschweißenden Bauteilen befestigt werden. Damit wird verhindert, daß das geschmolzene Schweißgut aus der Schweißfuge ausläuft oder austropft. Ein solches Badsicherungsband paßt sich beim Verlegen auch an gekrümmte Schweißfugen an, wie sie z.B. beim Behälterbau oder beim Rohrleitungsbau bekannt sind. Es ist montagefreundlich, weil das metallische Federband einen durchgehenden, hinreichend stabilen Träger für die daran und zwischen den Dichtleisten gehaltenen Keramikkörper bildet. Im übrigen bildet das metallische Federband eine durchgehende Abdeckung auch dann, wenn bei starken Krümmungen zwischen benachbarten Keramikkörpern Fugen oder Spalte entstehen.

Badsicherungsbänder sind in verschiedenen Ausführungen bekannt (DE-Z. "Der Praktiken" 7/95, Seite 330 bis 332). Neben Ausführungen, die nur aus einem langgestreckten Keramikkörper bestehen und deswegen nur an Abschnitten gerader Schweißfugen eingesetzt werden können, gibt es Badsicherungsbänder mit mehreren hintereinander angeordneten Keramikkörpern verhältnismäßig geringer Länge, wobei die Keramikkörper in Bandlängsrichtung durchgehende und miteinander fluchtende Bohrungen aufweisen, in denen Drähte geführt sind, die die Keramikkörper zusammenhalten. Damit können zwar gekrümmte Schweißfugenspalte abgedeckt werden, die Abdeckung ist aber in Abhängigkeit von der jeweiligen Krümmung mehr oder weniger unvollständig. Außerdem ist ein derartiges Badsicherungsband nicht sehr montagefreundlich. Das gilt im Prinzip auch für eine Ausführung, bei der die Keramikkörper mit Klebebändern zusammengehalten werden, die seitlich über die Keramikkörper vorstehen, so daß das Badsicherungsband mit den überstehenden Kleberändern beidseits des Schweißfugenspaltes an den zu verschweißenden Bauteilen befestigt werden kann. Hier stört außerdem, daß die Klebeverbindung sich unter der Schweißhitze lösen kann, wobei gegebenenfalls auch Dämpfe entstehen, die die Qualität der Schweißnaht beeinträchtigen.

Ein Badsicherungsband der eingangs beschriebenen Gattung ist bekannt (US-A-4 182 951). Es eignet sich aber nicht für den Einsatz bei der Herstellung hochwertiger Schweißverbindungen an niedrig- oder hochlegierten Stählen.

Aufgabe der Erfindung ist es, das Badsicherungsband der eingangs beschriebenen Gattung so zu verbessern, daß es auch bei der Herstellung hochwertiger Schweißverbindungen an niedrig- oder hochlegierten Stählen eingesetzt werden kann.

Diese Aufgabe wird dadurch gelöst, daß die Keramikkörper miteinander fluchtende Bohrungen oder Ausnehmungen aufweisen, die mit einem am Federband angeordneten Anschlußelement für eine Schutzgaszufuhr zu den zwischen Federband und Dichtleisten gebildeten Raum in Verbindung stehen. Damit kann das Badsicherungsband auch als Schutzgasband eingesetzt werden, indem im Schweißfugenbereich ein Schutzgas zugeführt wird, welches das Verzundern der Schweißnaht und der Übergangszonen verhindert. Das Schutzgas verteilt sich über die Bohrungen längs des Badsicherungsbandes und gelangt durch Spalten oder Fugen zwischen benachbarten Keramikkörpern sowie gegebenenfalls durch poröse Keramikkörper in den Bereich des Schweißfugenspaltes. Zusätzlich kann das Anschlußelement auch mit einem über seine Länge für das Schutzgas durchlässigen Schlauch verbunden sein, der sich durch die miteinander fluchtenden Bohrungen erstreckt.

Vorzugsweise sollte das Federband aus Edelstahl bestehen. Es kann formschlüssig oder kraftschlüssig mit den Dichtleisten verbunden sein.

Die Keramikkörper können am Federband befestigt sein. In Kombination dazu oder unabhängig davon können die Keramikkörper auch formschlüssig im Raum zwischen Federband und Dichtleisten gehalten sein. Dazu können die Keramikkörper einen trapezförmigen Querschnitt aufweisen, dessen längere Trapezseite dem Federband zugewandt ist, wobei die Dichtleisten an den schrägen Trapezseiten anliegende Stützflächen aufweisen.

Damit das Badsicherungsband nach Fertigstellung der Schweißnaht auch aus ungünstigen Lagen, z.B. aus einem bis auf eine kleine Öffnung geschlossenen Behälter oder aus engen Rohren, auf einfache Weise entfernt werden kann, empfiehlt sich eine Ausführung, bei der das Federband außenseitig im Bereich eines seiner Enden einen Anschluß für ein Zugelement aufweist.

Soll das Badsicherungsband zum Abdecken eines kreisförmigen Schweißfugenspaltes eingesetzt werden und dabei mit seinen Enden stoßartig zusammengesetzt werden, empfiehlt sich eine Ausführung, bei der das Federband außenseitig im Bereich seiner Enden Verbindungselemente aufweist, die die zu einem Stoß zusammengefügten Enden gegenseitig fixieren. Dazu kann an jedem Ende des Federbandes eine Öse mit quer zur Längserstreckung des Federbandes gerichteter Öffnung angeordnet sein sowie eine Klammer vorgesehen sein, deren Gabelenden in die Öffnungen der Ösen einsetzbar sind. Damit die Verbindung auch in montagetechnisch ungünstigen Positionen gelöst werden kann, kann die Klammer mit einem Zugelement versehen sein.

Im übrigen können die Dichtleisten an ihren Enden einander zugeordnete Vorsprünge und Ausnehmungen aufweisen, die beim Zusammenfügen der Enden einen Überlappungsstoß bilden, der gegen Entweichen von Schutzgas gesichert ist.

Grundsätzlich kann das erfindungsgemäße Badsicherungsband in herkömmlicher Weise mit Bügeln oder Klammern längs des Schweißfugenspaltes fixiert werden. Eine unmittelbare Befestigung des Badsicherungsbandes ist dann möglich, wenn die Dichtleisten unterseitig zwei mit gegenseitigem Abstand angeordnete und sich in Längsrichtung der Dichtleisten erstreckende Dichtlippen aufweisen und die Dichtleisten jeweils einen langslaufenden Kanal aufweisen, der über Schlitze oder Bohrungen mit einem Abstandsraum zwischen den Dichtlippen verbunden ist, wobei der Kanal an eine Unterdruckquelle anschließbar ist.

Im folgenden werden in der Zeichnung dargestellte Ausführungsbeispiele der Erfindung erläutert: es zeigen:
- Figur 1:: einen Längsschnitt durch einen Rohrstoß mit einem darin angeordneten Badsicherungsband.
- Figur 2:: einen Schnitt in Richtung II-II durch den Gegenstand nach Figur 1,
- Figur 3:: eine andere Ausführung des Gegenstandes nach Figur 1.
- Figur 4:: einen Schnitt in Richtung IV-IV durch den Gegenstand nach Figur 3.
- Figur 5:: einen Schnitt in Richtung V-V durch den Gegenstand nach Figur 3.
- Figur 6:: eine andere Ausführung des Gegenstandes nach Figur 1.
- Figur 7:: einen Schnitt in Richtung VII-VII durch den Gegenstand nach Figur 6.
- Figur 8:: eine andere Ausführung des Gegenstandes nach Figur 2.

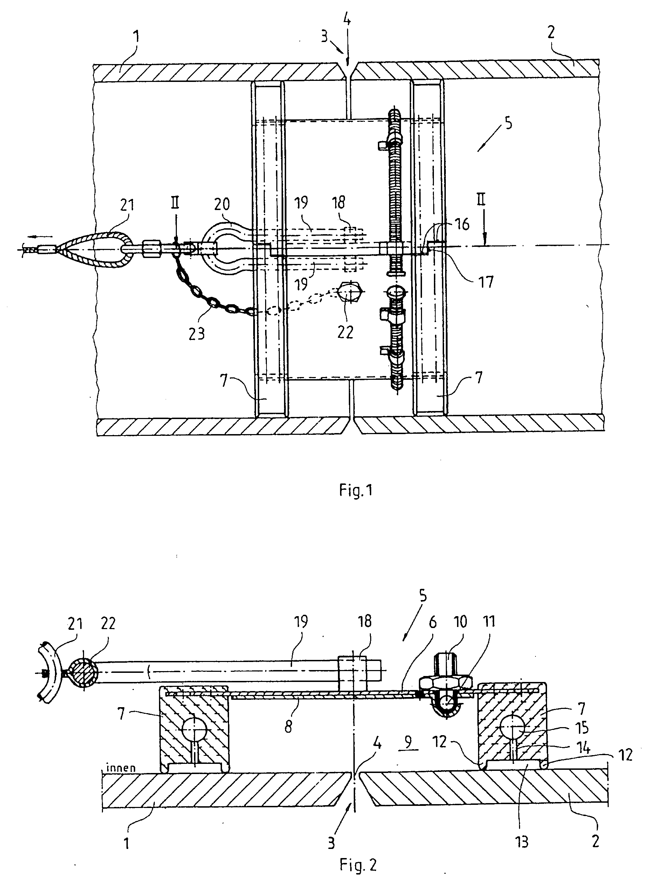

In den Figuren 1 und 2 erkennt man zwei miteinander zu verschweißende Rohrenden 1, 2, die zwischen sich eine Schweißfuge 3 mit einem offenen Schweißfugenspalt 4 bilden. Innenseitig längs des Schweißfugenspaltes 4 ist ein Badsicherungsband 5 verlegt, das aus einem langgestreckten Federband 6 aus Edelstahl besteht und an dessen Längsrändern Dichtleisten 7 aus Silikonkautschuk befestigt sind. Auf der den Rohrenden 1, 2 zugewandten Seite des Federbandes 6 sind dünnwandige Keramikkörper 8 befestigt, die bei der dargestellten Ausführung einen textilen Aufbau besitzen.

Das Federband 6, die Dichtleisten 7 und die Rohrenden 1, 2 definieren einen Raum 9, der bei der dargestellten Ausführung als Schutzgasraum dient. In diesem Raum 9 wird Schutzgas über ein Anschlußelement 10 zugeführt, das am Federband 6 angeordnet ist und in einen für das Schutzgas durchlässigen Schlauch 11 mündet, der am Federband 6 innerhalb des Raumes 9 verlegt ist.

Die Dichtleisten 7 sind materialschlüssig an die Längsränder des Federbandes 6 angeformt. Jede Dichtleiste 7 weist auf ihrer dem Rohrende 1 bzw. 2 zugewandten Seite zwei mit gegenseitigem Abstand angeordnete Dichtlippen 12 auf, die zwischen sich einen Abstandsraum 13 definieren. Vom Abstandsraum 13 gehen Schlitze oder Bohrungen 14 aus, die in einen Kanal 15 münden, der sich längs der Dichtleiste 7 erstreckt und der in nicht dargestellter Weise mit einer Unterdruckquelle verbindbar ist.

Die Dichtleisten 7 weisen an ihren Enden einander zugeordnete Vorsprünge 16 und Ausnehmungen auf, die beim Zusammenfügen der Enden des Badsicherungsbandes 5 einen Überlappungsstoß 17 bilden.

Das federband 6 weist auf seiner dem Raum 9 abgewandten Seite im Bereich seiner beiden Enden Ösen 18 auf, deren Öffnungen quer zur Längserstreckung des Federbandes 6 gerichtet sind und in die Gabelenden 19 einer Klammer 20 einfassen, die mit einem Zugelement 21 verbunden ist. Mit der Klammer 20 werden die beiden Enden des längs des Schweißfugenspaltes 4 verlegten Badsicherungsbandes 5 aneinander fixiert.

Das Federband 6 weist außerdem auf der dem Raum 9 abgewandten Seite eine weitere Öse 22 als Anschlußelement für ein weiteres Zugelement 23 auf, welches bei der dargestellten Ausführung mit dem Zugelement 21 verbunden ist.

Das Badsicherungsband 5 wird in der dargestellten Weise unterhalb des Schweißfugenspaltes 4 angeordnet, wobei seine beiden Enden mit Hilfe der Klammer 20 verriegelt werden. Die Kanäle 15 der Dichtleisten 7 werden an eine nicht dargestellte Unterdruckquelle angeschlossen, so daß sich die Dichtleisten 7 an der Wandung der Rohrenden 1, 2 festsaugen. Dann wird über das Anschlußelement 10 Schutzgas zugeführt, das sich wegen der Durchlässigkeit des Schlauches 11 gleichmäßig in Raum 9 verteilt. Wenn sichergestellt ist, daß der Raum 9 vollständig mit Schutzgas gefüllt ist, wird die Schweißung ausgeführt. Geschmolzenes Schweißgut, welches aus dem Schweißfugenspalt 4 läuft oder davon abtropft, wird von den Keramikkörpern 8 aufgefangen. Nach Fertigstellung der Schweißnaht wird die Schutzgaszufuhr beendet und wird der Unterdruck in den Kanälen 15 aufgehoben. Dann wird mit Hilfe des Zugelementes 21 die Klammer 20 aus den Ösen 18 herausgezogen, so daß die beiden Enden des Badsicherungsbandes 5 frei sind. Durch weiteres Ziehen am Zugelement 20 wird über das Zugelement 23 das zugeordnete Ende des Badsicherungsbandes 5 in Zugrichtung bewegt, wobei es sich nach Maßgabe der gegebenen lokalen Verhältnisse elastisch verformen kann und dabei auch tordieren kann. Dadurch besteht die Möglichkeit, das Badsicherungsband 5 z.B. auch durch verhältnismäßig kleine Behälteröffnungen aus einem ansonsten allseitig geschlossenen Behälter herauszuziehen.

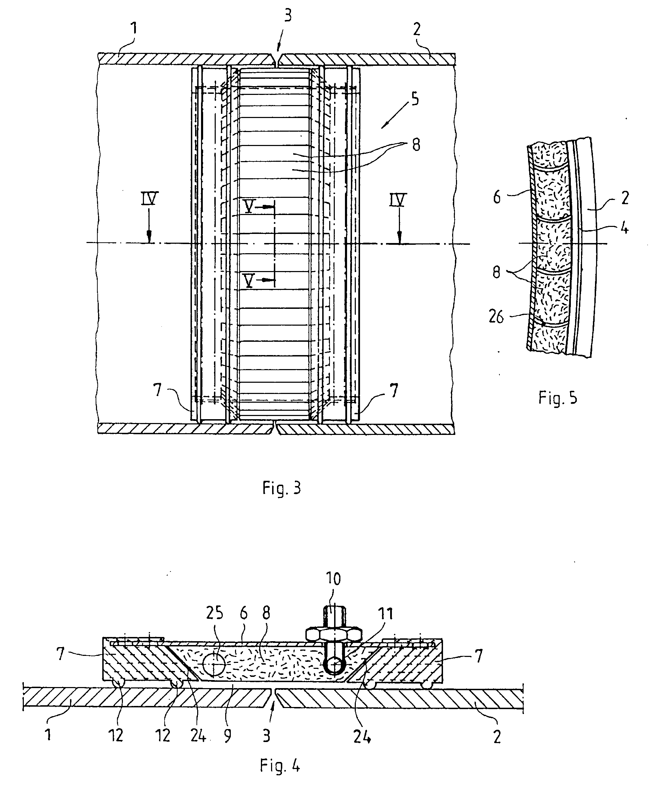

In den Figuren 3 bis 8 bezeichnen gleiche Bezugszeichen gleiche Teile. Die Ösen 18, 22, die Klammer 20 und die Zugelemente 21, 23 sowie der Überlappungsstoß 17 sind nicht gezeichnet. Im übrigen wird das in diesen Figuren gezeichnete Badsicherungsband nicht mit Unterdruck, sondern in an sich bekannter Weise mit Bügeln fixiert, die beidseits der Schweißfuge 3 magnetisch oder mit Unterdruck an den Wandungen der Rohrenden 1, 2 gehalten werden.

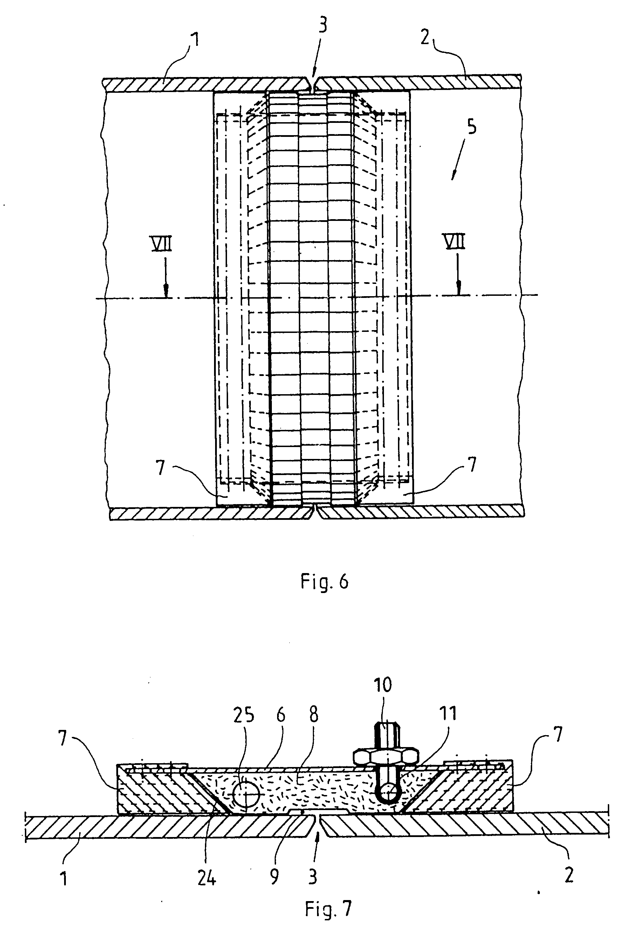

Bei der Ausführung nach den Figuren 3 bis 5 besitzen die Keramikkörper 8 einen trapezförmigen Querschnitt und liegen mit der längeren Trapezseite am Federband 6 an, Die Dichtleisten 7 besitzen den schrägen Trapezseiten zugeordnete Stützflächen 24, so daß die Keramikelemente 8 formschlüssig zwischen dem Federband 6 und den Dichtleisten 7 gehalten sind. Das schließt nicht aus, daß die Keramikkörper 8 zusätzlich noch am Federband 6 befestigt sind. Die Keramikkörper 8 besitzen durchgehende, miteinander fluchtende Bohrungen 25 und in einer dieser Bohrungen 25 ist der mit dem Anschlußelement 10 verbundene, für das Schutzgas durchlässige Schlauch 11 verlegt. Das aus dem Schlauch 11 austretende Schutzgas gelangt über Spalte oder Fugen 26 zwischen benachbarten Keramikkörpern 8 in den Raum 9 und damit in den Bereich der Schweißfuge 3. Wie in Figur 5 angedeutet, besitzen die Fugen 26 zwischen benachbarten Keramikkörpern 8 eine derartige Kontur, daß in einer Projektion auf das Federband 6 die benachbarten Keramikkörper 8 sich im Fugenbereich einander überdecken. Dadurch wird verhindert, daß geschmolzenes Schweißmaterial bis zum Federband 6 gelangt.

Die in den Figuren 6 und 7 dargestellte Ausführung entspricht im wesentlichen der Ausführung nach den Figuren 3 bis 5, mit der Maßgabe, daß die Keramikkörper 8 mit ihrer den Rohrenden 1, 2 zugewandten Trapezseite an den Wandungen dieser Rohrenden 1, 2 anliegen und lediglich im Bereich der Schweißfuge 3 eine langslaufende Ausnehmung aufweisen, die den Raum 9 für das Schutzgas bildet.

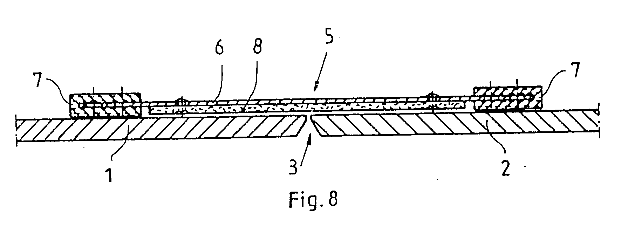

Die Figur 8 macht deutlich, daß das Badsicherungsband 5, wenn es nicht mit einer Schutzgaszufuhr ausgerüstet ist, als sehr flaches Band ausgebildet werden kann, wenn die am Federband 6 befestigten Keramikkörper 8 entsprechend dünnwandig sind und die Dichtleisten 7 eine geringe Höhe besitzen.

## Patentansprüche

1. Badsicherungsband zum Abdecken eines Schweißfugenspaltes (4) zwischen miteinander zu verschweißenden Bauteilen, mit mehreren, in Bandlängsrichtung hintereinander angeordneten Keramikkörpern (8), die mit einem verformbaren Träger zusammengehalten werden, der ein metallisches Federband (6) ist, an dessen Längsrändern Dichtleisten (7) aus einem hitzebeständigen Silikon- oder Fluorkautschuk angeordnet sind, die sich beidseits des Schweißfugenspaltes (4) auf den Bauteilen (1, 2) abstützen, wobei die Keramikkörper (8) in den zwischen Federband (6) und den Dichtleisten (7) gebildeten Raum (9) angeordnet und gehalten sind, **dadurch gekennzeichnet,** daß die Keramikkörper miteinander fluchtende Bohrungen (25) oder Ausnehmungen aufweisen, die mit einem am Federband (6) angeordneten Anschlußelement (10) für eine Schutzgaszufuhr zu dem zwischen Federband (6) und Dichtleisten (7) gebildeten Raum (9) in Verbindung stehen.

2. Badsicherungsband nach Anspruch 1, **dadurch gekennzeichnet,** daß das Federband (6) aus Edelstahl besteht.

3. Badsicherungsband nach Anspruch 1 oder 2, **dadurch gekennzeichnet,** daß das Federband (6) formschlüssig oder kraftschlüssig mit den Dichtleisten (7) verbunden ist.

4. Badsicherungsband nach einem der Ansprüche 1 bis 3, **dadurch gekennzeichnet,** daß die Keramikkörper (8) am Federband (6) befestigt sind.

5. Badsicherungsband nach einem der Ansprüche 1 bis 4, **dadurch gekennzeichnet,** daß die Keramikkörper (8) formschlüssig im Raum (9) zwischen Federband (6) und Dichtleisten (7) gehalten sind.

6. Badsicherungsband nach einem der Ansprüche 1 bis 5, **dadurch gekennzeichnet,** daß die Keramikkörper (8) einen trapezförmigen Querschnitt aufweisen, dessen längere Trapezseite dem Federband (6) zugewandt ist, und daß die Dichtleisten (7) an den schrägen Trapezseiten anliegende Stützflächen (24) aufweisen.

7. Badsicherungsband nach einem der Ansprüche 1 bis 6, **dadurch gekennzeichnet,** daß das Anschlußelement (10) mit einem über seine Länge für Schutzgas durchlässigen Schlauch (11) verbunden ist, der sich durch die miteinander fluchtenden Bohrungen (25) erstreckt.

8. Badsicherungsband nach einem der Ansprüche 1 bis 7, **dadurch gekennzeichnet,** daß das Federband (6) außenseitig im Bereich eines seiner Enden einen Anschluß (22) für ein Zugelement (23) aufweist.

9. Badsicherungsband nach einem der Ansprüche 1 bis 8, **dadurch gekennzeichnet,** daß das Federband (6) außenseitig im Bereich seiner Enden Verbindungselemente aufweist, die die zu einem Stoß zusammengefügten Enden gegenseitig fixieren.

10. Badsicherungsband nach einem der Ansprüche 1 bis 9, **dadurch gekennzeichnet,** daß an jedem Ende des Federbandes (6) eine Öse (18) mit quer zur Längserstreckung des Federbandes (6) gerichteter Öffnung angeordnet ist, daß eine Klammer (20) vorgesehen ist, deren Gabelenden (19) in die Öffnungen der Ösen (18) einsetzbar sind, und daß die Klammer (20) mit einem Zugelement (21) verbunden ist.

11. Badsicherungsband nach einem der Ansprüche 1 bis 10, **dadurch gekennzeichnet,** daß die Dichtleisten (7) an ihren Enden einander zugeordnete Vorsprünge (16) und Ausnehmungen aufweisen, die beim Zusammenfügen der Enden einen Überlappungsstoß (17) bilden.

12. Badsicherungsband nach einem der Ansprüche 1 bis 11, **dadurch gekennzeichnet,** daß die Dichtleisten (7) unterseitig zwei mit gegenseitigem Abstand angeordnete und sich in Längsrichtung der Dichtleisten (7) erstreckende Dichtlippen (12) aufweisen und daß die Dichtleisten (7) jeweils einen längslaufenden Kanal (15) aufweisen, der über Schlitze oder Bohrungen (14) mit einem Abstandsraum (13) zwischen den Dichtlippen (12) verbunden ist und der an eine Unterdruckquelle anschließbar ist.

## Claims

1. Protective cell band for covering a welding joint gap (4) between members to be welded together, comprising several ceramic bodies (8) which are arranged one after the other in the band longitudinal direction and which are held by a deformable carrier, which is a metallic spring strip (6), at the longitudinal edges of which are arranged sealing strips (7) of a heat-resistant silicone or fluoro rubber, which is supported on the components (1, 2) at both sides of the weld joint gap (4), wherein the ceramic bodies (8) are arranged and retained in the space (9) formed between spring strip (6) and the sealing strips (7), characterised in that the ceramic bodies have mutually aligned bores (25) or recesses which stand in connection with a connecting element (10), which is arranged at the spring strip (6), for a protective gas feed to the space (9) formed between spring strip (6) and sealing strips (7).

2. Protective cell band according to claim 1, characterised in that the spring strip (6) consists of high-grade steel.

3. Protective cell band according to claim 1 or 2, characterised in that the spring strip (6) is connected with the sealing strips (7) in shape-locking or force-locking manner.

4. Protective cell band according to one of claims 1 to 3, characterised in that the ceramic bodies (8) are attached to the spring strip (6).

5. Protective cell band according to one of claims 1 to 4, characterised in that the ceramic bodies (8) are held in shape-locking manner in the space (9) between spring strip (6) and sealing strips (7).

6. Protective cell band according to one of claims 1 to 5, characterised in that the ceramic bodies (8) have a trapezium-shaped cross-section, the longer trapezium side of which faces the spring strip (6), and that the sealing strips (7) have support surfaces (24) bearing against the inclined trapezium sides.

7. Protective cell band according to one of claims 1 to 6, characterised in that the connecting element (10) is connected with a hose (11) which is permeable over its length for protective gas and which extends through the mutually aligned bores (25).

8. Protective cell band according to one of claims 1 to 7, characterised in that the spring strip (6) has at the outer side and in the region of one of its ends a connection (22) for a pull element (23).

9. Protective cell band according to one of claims 1 to 8, characterised in that the spring strip (6) has at the outer side and in the region of its ends connecting elements which mutually fix the ends brought together into a butt joint.

10. Protective cell band according to one of claims 1 to 9, characterised in that an eye (18) with an opening oriented transversely to the longitudinal extent of the spring strip (6) is arranged at each end of the spring strip (6), that a clamp (20) is provided, the fork ends (19) of which are insertable in the openings of the eyes (18), and that the clamp (20) is connected with a pull element (21).

11. Protective cell band according to one of claims 1 to 10, characterised in that the sealing strips (7) have at their ends mutually associated projections (16) and recesses which form an overlap butt joint (17) on bringing together of the ends.

12. Protective cell band according to one of claims 1 to 11, characterised in that the sealing strips (7) have at the underside two sealing lips (12) which are arranged at a mutual spacing and extend in the longitudinal direction of the sealing strips (7) and that the sealing strips (7) each have a respective longitudinally extending channel (15) which is connected with a spacer cavity (13) between the sealing lips (12) by way of slots or bores (14) and which is connectible with a source of underpressure.

## Revendications

1. Bande de garde pour couvrir un interstice de soudage (4) entre des pièces structurelles à souder ensemble, comportant plusieurs corps céramiques (8) qui sont agencés en succession dans la direction longitudinale de la bande, et dont la cohésion est assurée par un support déformable se présentant comme un ruban métallique élastique (6) sur les bords longitudinaux duquel se trouvent des listels d'étanchement (7) en un caoutchouc siliconé ou fluoré résistant à la chaleur, qui prennent appui sur les pièces structurelles (1, 2) de part et d'autre de l'interstice de soudage (4), les corps céramiques (8) étant logés et retenus dans l'espace (9) formé entre le ruban élastique (6) et les listels d'étanchement (7), caractérisée par le fait que les corps céramiques présentent des perçages (25) ou évidements qui coïncident mutuellement et sont en communication avec un élément de raccordement (10) implanté sur le ruban élastique (6), et destiné à une amenée de gaz protecteur vers l'espace (9) formé entre ledit ruban élastique (6) et les listels d'étanchement (7).

2. Bande de garde selon la revendication 1, caractérisée par le fait que le ruban élastique (6) consiste en de l'acier fin.

3. Bande de garde selon la revendication 1 ou 2, caractérisée par le fait que le ruban élastique (6) est relié aux listels d'étanchement (7) par concordance de formes, ou mécaniquement.

4. Bande de garde selon l'une des revendications 1 à 3, caractérisée par le fait que les corps céramiques (8) sont fixés au ruban élastique (6).

5. Bande de garde selon l'une des revendications 1 à 4, caractérisée par le fait que les corps céramiques (8) sont retenus, par concordance de formes, dans l'espace (9) situé entre le ruban élastique (6) et les listels d'étanchement (7).

6. Bande de garde selon l'une des revendications 1 à 5, caractérisée par le fait que les corps céramiques (8) possèdent une section transversale trapézoïdale, dont le côté long du trapèze est tourné vers le ruban élastique (6) ; et par le fait que les listels d'étanchement (7) présentent des surfaces d'appui (24) appliquées sur les côtés inclinés du trapèze.

7. Bande de garde selon l'une des revendications 1 à 6, caractérisée par le fait que l'élément de raccordement (10) est relié à un flexible (11) qui est perméable au gaz protecteur sur sa longueur, et s'étend à travers les perçages (25) coïncidant mutuellement.

8. Bande de garde selon l'une des revendications 1 à 7, caractérisée par le fait que le ruban élastique (6) présente extérieurement, dans la région de l'une de ses extrémités, un organe de rattachement (22) affecté à un élément de traction (23).

9. Bande de garde selon l'une des revendications 1 à 8, caractérisée par le fait que le ruban élastique (6) présente extérieurement, dans la région de ses extrémités, des éléments de liaison assurant la consignation à demeure réciproque des extrémités assemblées en une jointure.

10. Bande de garde selon l'une des revendications 1 à 9, caractérisée par le fait qu'un oeillet (18), muni d'un orifice dirigé transversalement par rapport à l'étendue longitudinale du ruban élastique (6), est disposé à chaque extrémité dudit ruban élastique (6) ; par le fait qu'il est prévu un crampon (20) dont les extrémités fourchues (19) peuvent être insérées dans les orifices des oeillets (18) ; et par le fait que le crampon (20) est relié à un élément de traction (21).

11. Bande de garde selon l'une des revendications 1 à 10, caractérisée par le fait que les listels d'étanchement (7) comportent, à leurs extrémités, des protubérances (16) et des évidements qui sont affectés les uns aux autres et forment une jointure (17) à chevauchement lors de l'assemblage des extrémités.

12. Bande de garde selon l'une des revendications 1 à 11, caractérisée par le fait que les listels d'étanchement (7) présentent, à leurs faces inférieures, deux lèvres d'étanchement (12) agencées avec espacement mutuel et s'étendant dans la direction longitudinale desdits listels d'étanchement (7) ; et par le fait que lesdits listels d'étanchement (7) comportent un canal respectif (15) qui s'étend longitudinalement, est relié, par l'intermédiaire de fentes ou de perçages (14), à un intervalle d'espacement (13) entre les lèvres d'étanchement (12), et peut être raccordé à une source de dépression.
